# EUROPEAN PATENT APPLICATION

(11) **EP 4 270 817 A1**
(43) Date of publication of application: **01.11.2023**
(21) Application number: 22170704.5
(22) Date of filing: 29.04.2022
(51) Int. Cl.: H04B 7/185

(54) **METHOD FOR COMPUTING OR ESTIMATING A SPECIFIC SERVICE TIME INTERVAL OR A SPECIFIC SERVICE TIME INFORMATION OF OR RELATED TO A USER EQUIPMENT IN A MOBILE COMMUNICATION NETWORK BEING OR AT LEAST COMPRISING A PART CORRESPONDING TO OR BEING A NON-TERRESTRIAL NETWORK, USER EQUIPMENT, SYSTEM OR MOBILE COMMUNICATION NETWORK, PROGRAM AND COMPUTER-READABLE MEDIUM**

(71) Applicant: Deutsche Telekom AG, 53113 Bonn (DE)
(72) Inventor: KLATT, Axel, 50999 Köln (DE)
(74) Representative: Schwöbel, Thilo K.

(57) **Abstract**

The invention relates to a method for computing or estimating a specific service time interval or a specific service time information of or related to a user equipment in a mobile communication network being or at least comprising a part corresponding to or being a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality moving relative to the earth surface, thereby providing radio coverage to a moving area corresponding to an earth-moving radio cell,
wherein the base station entity transmits, and the user equipment receives, a reference location information and a general service time information, the reference location information relating to a specific part of the currently covered area, and the general service time information relating to until when the base station entity likely stops serving the currently covered area,
wherein, in order to compute or estimate the specific service time interval or the specific service time information of or related to the user equipment, the method comprises the following steps:
-- in a first step, the user equipment generates a location information of or related to its own position relative to the location indicated by the reference location information,
-- in a second step, the user equipment computes or generates an estimation of the specific service time interval or the specific service time information, the estimation being based on the location information of its own position and the reference location information.

## Description

### BACKGROUND

The present invention relates a method for computing or estimating a specific service time interval or a specific service time information of or related to a user equipment in a mobile communication network being or at least comprising a part corresponding to or being a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality moving relative to the earth surface along a direction of movement, thereby providing radio coverage to a moving area corresponding to an earth-moving radio cell.

Furthermore, the present invention relates to a user equipment for computing or estimating a specific service time interval or a specific service time information of or related to a user equipment in a mobile communication network being or at least comprising a part corresponding to or being a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality moving relative to the earth surface, thereby providing radio coverage to a moving area corresponding to an earth-moving radio cell.

Additionally, the present invention relates to a system or a mobile communication network for computing or estimating a specific service time interval or a specific service time information of or related to a user equipment in a mobile communication network being or at least comprising a part corresponding to or being a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality moving relative to the earth surface, thereby providing radio coverage to a moving area corresponding to an earth-moving radio cell.

Furthermore, the present invention relates to a program and to a computer-readable medium for computing or estimating a specific service time interval or a specific service time information of or related to a user equipment in a mobile communication network being or at least comprising a part corresponding to or being a non-terrestrial network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part of or a region within a country) in a repeating pattern of typically stationary (radio) cells (and associated base station entities) which typically belong to (or are used by or associated or assigned to) a mobile network operator (MNO).

Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space based network infrastructure include, e.g., mobile satellite connectivity with low earth orbit (LEO) satellites, medium earth orbit (MEO) satellites and/or geostationary earth orbit (GEO) satellites and also so-called high altitude platforms or high altitude pseudo-satellites (HAPS).

Such non-terrestrial networks are able to provide global cellular connectivity to handheld devices or user equipments, typically using satellite or HAP coverage with quasi earth fixed beams, i.e. radio coverage is attempted to be provided, for a certain considered (quasi) fixed geographical area (of the considered radio cell), in an almost statical or unchanged manner during a certain time interval or until a certain point in time.

This is in contrast to using earth-moving beams by means of which radio coverage is provided in a moving geographical area, or earth-moving radio cell, that is moving, relative to the earth surface, together with the movement of the satellite (or the high altitude platform device); such earth-moving radio cells typically being located around a geographical location, often corresponding to a projection of the current position of the satellite (or of the high altitude platform device), along a more or less vertical line, on to the earth surface.

However in practice, the use of such earth-moving radio cells is challenging as this implies a complete redesign of classical mobility and coverage approaches from terrestrial networks (TNs) known since decades.

### SUMMARY

An object of the present invention is to provide a technically simple, effective and cost-effective solution for computing or estimating a specific service time interval or a specific service time information of or related to a (specific) user equipment in a mobile communication network served by a non-terrestrial network, i.e. the (specific) user equipment being served by a non-terrestrial network base station entity providing radio coverage to a moving (geographical) area corresponding to an earth-moving radio cell. A further object of the present invention is to provide a corresponding user equipment, system or mobile communication network, and a corresponding program and computer-readable medium.

The object of the present invention is achieved by a method for computing or estimating a specific service time interval or a specific service time information of or related to a user equipment in a mobile communication network being or at least comprising a part corresponding to or being a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality moving relative to the earth surface along a direction of movement, thereby providing radio coverage to a moving area corresponding to an earth-moving radio cell, wherein the base station entity transmits, and the user equipment receives, a reference location information and a general service time information, the reference location information relating to a specific part of the currently covered area, and the general service time information relating to until when the base station entity likely stops serving the currently covered area, wherein, in order to compute or estimate the specific service time interval or the specific service time information of or related to the user equipment, the method comprises the following steps:
-- in a first step, the user equipment generates a location information of or related to its own position relative to the location indicated by the reference location information,
-- in a second step, the user equipment computes or generates an estimation of the specific service time interval or the specific service time information, the estimation being based on the location information of its own position and the reference location information.

It is thereby advantageously possible according to the present invention that it is possible to reduce coverage or connection losses of the considered specific user equipment due to the serving the base station entity using an earth-moving radio cell or radio coverage area. According to the present invention, it is advantageously possible to either compute or estimate a specific service time interval, or to compute or estimate a specific service time information of or related to the specific (i.e. considered) user equipment. The service time typically corresponds to or indicates the duration or period during which the specific or considered user equipment is able to be provided radio coverage by the antenna entity or functionality (of the base station entity), and the specific service time (related or associated to the specific or considered user equipment) is able to be defined either by means of a specific service time interval (having a defined starting point in time and a defined termination point in time), or by means of a specific service time information, indicating a termination point in time of the specific service time.

The present invention is focused on low earth orbit (LEO) satellites or high altitude platform entities which typically are located up to 300 km until 1500 km above ground (especially 800 km to 1000 km), and are, typically, traveling at a velocity of around 7 km/s, resulting in a round trip time about the globe of typically about 100 minutes. The coverage area of a low earth orbit satellite on the ground is typically a circle or an ellipse moving over the ground.

Typically, satellites (or high altitude platform entities) provide comparatively small coverage areas (on the earth surface) via spotbeams (typically using a plurality of antennas, especially phased-array antennas), thereby especially increasing the system capacity; for the sake of simplicity, in the context of the present invention, it is assumed that one (earth-moving) radio cell or coverage area is provided by one satellite or high altitude platform device (i.e. a single spot beam per satellite or high altitude platform device).

The radio cell or coverage area is an earth-moving radio cell or coverage area, typically moving or travelling on the earth surface in unison with the movement of the satellite or high altitude platform device. This means that a considered satellite or high altitude platform device is able to provide coverage and/or service (or communication services) only during a defined period of time or time interval to a user equipment that is assumed being stationary or almost stationary on or above the earth surface.

This defined period of time or time interval of coverage or service, of course, depends on the size and/or geometry of the earth-moving radio cell or coverage area, and on the velocity and/or direction of movement and/or trajectory of the satellite or high altitude platform device above ground; however and regarding a considered specific user equipment, the specific period of time or the specific time interval of service (or of coverage) also depends on the relative position of the considered user equipment relative to the earth-moving radio cell or coverage area.

The present invention provides a method for computing or estimating this specific service time interval (or specific service time information) of or related to a (specific considered) user equipment. The user equipment is connected to (or is in) a mobile communication network that is a non-terrestrial network; alternatively the mobile communication network at least comprises a part that corresponds to or is a non-terrestrial network. The (considered specific) user equipment is served by a base station entity as in a conventionally known mobile communication network; however, the serving base station entity is assumed as being part of the non-terrestrial network (or, at least, the non-terrestrial network part) of the mobile communication network.

According to the present invention, the base station entity is provided with at least one antenna entity or functionality (but preferably, the base station entity is provided with more than one antenna entities or functionalities), the at least one antenna entity or functionality (of the base station entity) is either a satellite-based antenna entity or functionality (i.e. located onboard a satellite), or an antenna entity or functionality based on a high-altitude platform device (i.e. located onboard such a high altitude platform device). The base station entity is able to serve (i.e. providing communication services to) the considered user equipment by means of or using the at least one antenna entity or functionality - typically using a service (radio) link towards and/or from the user equipment in order to realize downlink and/or uplink data transmissions.

According to the present invention, the whole (or mayor parts of the) functionality of the base station entity might be located onboard the satellite or onboard the high altitude platform device (hence, in this case, typically requiring some kind of backhaul connectivity to an earth or ground station and/or to another satellite or high altitude platform device). Alternatively, the mayor parts of the functionality of the base station entity might be located either at or in an earth or ground station, or at or in another satellite or high altitude platform device (in this case, typically requiring some kind of feeder link or feeder connectivity to an earth or ground station and/or to another satellite or high altitude platform device).

The antenna entity or functionality (either as part of the satellite or as part of the high altitude platform device) thus moves relative to the earth surface along a direction of movement (and/or following a certain, typically predefined, trajectory), and is thereby able to provide radio coverage to the earth-moving radio cell. In case of a satellite-based antenna entity or functionality, the trajectory of the movement of the satellite (at least from a fixe or quasi stationary ground perspective) can typically very well be approximated by an almost straight line as the curvatures of such satellite trajectories is almost negligible from such a perspective. However, in case of a high-altitude platform device, the trajectory of such a device might be less straight, i.e. having a non-negligible curvature. According to the present invention, in order to be able to compute or estimate the specific service time interval or the specific service time information (regarding the specific considered user equipment), the base station entity transmits (i.e. using its satellite-based antenna entity or functionality), and the user equipment receives, a reference location information and a general service time information. The reference location information relates to a specific part of the currently covered area, typically the center of the currently covered area (or radio cell). The general service time information relates to until when (i.e. at which (future) point in time) the base station entity (via its satellite-based antenna entity or functionality) likely stops being able to serve the currently covered area.

It is assumed according to the present invention that the reference location information and the general service time information is transmitted repeatedly, especially in regular time intervals of, e.g., 320 ms or 640 ms or 1280 ms or of another duration, and that the transmitted values of the reference location information and the general service time information are updated in order to correspond to the correct (or current) values either at the transmission point in time, or at a point in time corresponding to a predetermined (comparatively small) offset time relative to the transmission point in time; hence, the successive indications (by the base station entity, and towards the user equipment) of the (repeatedly updated) reference location information provide (or correspond to) a sequence of points or locations (typically on the earth surface) that, collectively, at least roughly define a travel path of the earth-moving radio cell (or, at least, from which such a travel path could be derived), especially a central trajectory path of the earth-moving radio cell.

However of course, the indication (or value) of the general service time information is, generally, not able to indicate the service time (i.e. the service time interval or the service time information) experienced by a specific user equipment, i.e. located at a specific location having a certain (orthogonal or lateral) distance from the travel path (or path of movement) of the earth-moving radio cell (or coverage area).

In order, for the specifically considered user equipment to be able to compute or estimate its specific service time interval or its specific service time information (i.e. the specific service time interval or the specific service time information of or related to the specific user equipment), it is proposed according to the present invention to generate (by the user equipment, and in a first step) a location information of or related to the position of the user equipment relative to the location indicated by the reference location information (i.e. a location information of or related to the user equipment's own position relative to the location indicated by the reference location information), and to compute or to generate (by the user equipment, and in a second step), based on this location information (of the user equipment's position) and the reference location information (or a plurality of preceding pieces of reference location information), an estimation of the specific service time interval or the specific service time information (of that specific considered user equipment).

Hence with such an earth-moving radio cell, in case a stationary user equipment - served by a moving satellite - is considered, the coverage area for such a user equipment continuously changes, and depending on where the user equipment is located in the - typically circular or elliptical - coverage area, the time the user equipment is (able to be) served by a particular satellite or antenna entity or functionality depends on the geographical location of the user equipment, especially with respect to the travel path of the earth-moving radio cell.

According to the present invention, it is advantageously possible and preferred that the location information of the user equipment is generated using a global navigation satellite system, wherein the user equipment especially comprises a global navigation satellite system receiver entity or functionality in order to be able generate the location information.

It is thereby advantageously possible that the user equipment is able easily and comparatively precisely generate the location information of its current location. Alternatively or cumulatively to determine its position and to generate the location information of the user equipment based on using a global navigation satellite system and a global navigation satellite system receiver entity, the user equipment might also, e.g., use other pieces of information to infer its current position or location, e.g. signals of mobile communication network base station entities, or of access points such as Wifi hotspots or the like.

According to the present invention, it is advantageously furthermore possible and preferred that the user equipment, based on the generated location information, determines its lateral distance from the central part of the earth-moving radio cell (or the orthogonal lateral distance), especially the central trajectory path of the moving earth-moving radio cell,
wherein, based on this lateral distance and based on the general service time information, the specific service time interval or the specific service time information is determined, especially taking into consideration ephemeris data received from the base station entity.

It is thereby advantageously possible according to the present invention that the user equipment is comparatively easily able to calculate or to compute or estimate the (or its) specific service time interval or the specific service time information. Especially for (approximately) circularly shaped and/or (approximately) elliptically shaped earth-moving radio cells moving in a manner rather symmetrically with regard to its central part, on which side (from the central part of the radio cell) the user equipment is distanced is irrelevant. However, in case that - especially of, typically, high-altitude platform devices having a trajectory where the curvature is non-negligible - the movement of the earth-moving radio cells is not (completely) symmetrical with regard to the central part, whether the user equipment is distanced on one side or on the other side (or, to the left or to the right) of the central part of the radio cell has also an influence on the specific service time interval or the specific service time information; i.e. the specific service time interval or the specific service time information is determined based not only on the lateral distance and on the general service time information, but also based on to which side (from the central part of the radio cell) the user equipment is distanced.

According to the present invention, it is furthermore advantageously possible and preferred that the base station entity transmits, and the user equipment receives, the reference location information and the general service time information as information elements as part of a system information block, especially broadcast by the base station entity, especially system information block 19 with 3GPP NR technology.

Furthermore, it is advantageously possible and preferred according to the present invention that the user equipment transmits, to the base station entity, the estimation of the (or its) specific service time interval or the specific service time information.

It is thereby advantageously possible according to the present invention that, e.g., a handover operation is able to prepared and coordinated sufficiently early.

Furthermore, it is advantageously possible and preferred according to the present invention that the specific service time interval or the specific service time information, transmitted by the user equipment, is related to the information of the serving antenna entity or functionality and/or transmitted to at least one neighbouring earth-moving radio cell or satellite coverage area of a non-serving antenna entity or functionality and is especially indicated in remaining UTC seconds in 10 ms units since 00:00:00 on Gregorian calendar date 1 January, 1900 (midnight between Sunday, December 31, 1899 and Monday, January 1, 1900).

Thereby, it is advantageously possible that the base station entity and/or the serving antenna entity or functionality, or, alternatively, the non-serving antenna entity or functionality is able to determine the optimal mode of operation regarding the user equipment, especially regarding, e.g., a handover strategy to apply.

According to a further preferred embodiment of the present invention, the specific service time interval or the specific service time information transmitted by the user equipment is provided with additional information about the user equipment's mobility state such as user equipment's ground based velocity, heading, height information, trajectory information and/or user equipment-specific reception information, such as antenna characteristics or satellite receiving properties such as the angle over horizon of first satellite visibility.

Thereby, it is advantageously possible that additional parameters and pieces of information are able to be taken into consideration not only by the user equipment but also by the base station entity and/or the respective antenna entity or functionality.

Furthermore, the present invention relates to a user equipment for computing or estimating a specific service time interval or a specific service time information of or related to a user equipment in a mobile communication network being or at least comprising a part corresponding to or being a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality moving relative to the earth surface, thereby providing radio coverage to a moving area corresponding to an earth-moving radio cell, wherein the base station entity transmits, and the user equipment receives, a reference location information and a general service time information, the reference location information relating to a specific part of the currently covered area, and the general service time information relating to until when the base station entity likely stops serving the currently covered area, wherein, in order to compute or estimate the specific service time interval or the specific service time information of or related to the user equipment, the user equipment in configured such that:
-- the user equipment generates a location information of or related to its own position relative to the location indicated by the reference location information,
-- the user equipment computes or generates an estimation of the specific service time interval or the specific service time information, the estimation being based on the location information of its own position and the reference location information.

Furthermore, the present invention relates to a system or mobile communication network for computing or estimating a specific service time interval or a specific service time information of or related to a user equipment in a mobile communication network being or at least comprising a part corresponding to or being a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality moving relative to the earth surface, thereby providing radio coverage to a moving area corresponding to an earth-moving radio cell,
wherein the base station entity transmits, and the user equipment receives, a reference location information and a general service time information, the reference location information relating to a specific part of the currently covered area, and the general service time information relating to until when the base station entity likely stops serving the currently covered area, wherein, in order to compute or estimate the specific service time interval or the specific service time information of or related to the user equipment, the system and mobile communication network is configured such that:
-- the user equipment generates a location information of or related to its own position relative to the location indicated by the reference location information,
-- the user equipment computes or generates an estimation of the specific service time interval or the specific service time information, the estimation being based on the location information of its own position and the reference location information.

Additionally, the present invention relates to a program comprising a computer readable program code which, when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

Still additionally, the present invention relates to a computer-readable medium comprising instructions which when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

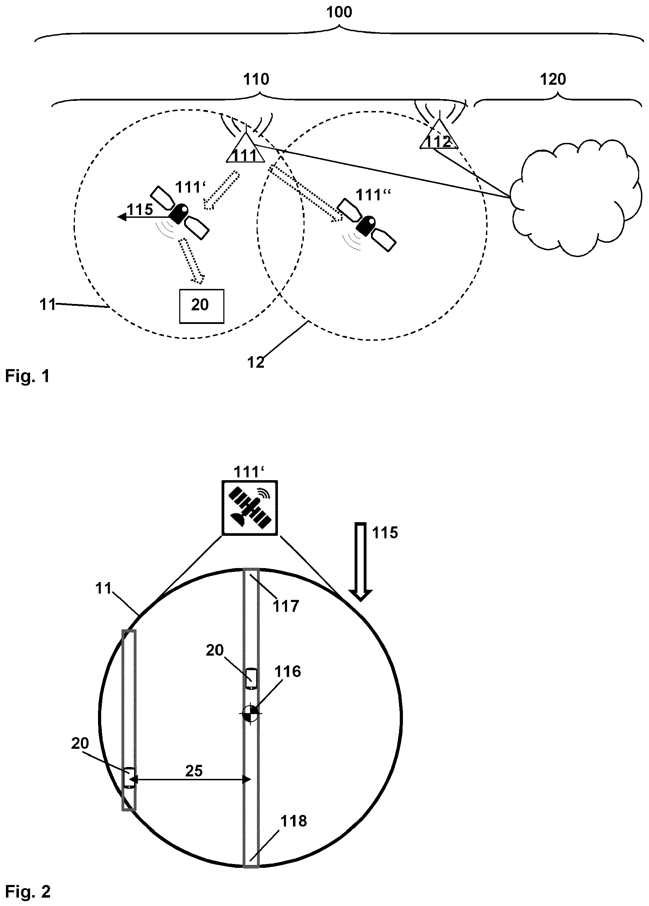

Figure 1 schematically illustrates the situation of a user equipment in a mobile communication network being a non-terrestrial network or at least comprising a part corresponding to a non-terrestrial network, the user equipment being served by a base station entity having at least an antenna entity or functionality being a satellite-based antenna entity or functionality.
Figure 2 schematically illustrates the situation of the user equipment being served by a base station entity having a satellite-based antenna entity or functionality moving relative to the earth surface along a direction of movement, thereby providing radio coverage to a moving area corresponding to an earth-moving radio cell.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in a mobile communication network 100. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112.

The mobile communication network 100 (or telecommunications network 100) is or at least comprises a part corresponding to or being a non-terrestrial network. The user equipment 20 is served by the (first) base station entity 111 being part of that non-terrestrial network or that non-terrestrial network part.

The base station entity 111 has or is provided with - in view of serving or providing radio coverage to the user equipment 20 - at least one antenna entity or functionality 111' being either a satellite-based antenna entity or functionality, or an antenna entity or functionality based on a high-altitude platform; Figure 1 primarily shows the alternative of a satellite-based antenna entity or functionality 111'. The antenna entity or functionality 111' - being part of the non-terrestrial network (part) of the mobile communication network 100 - is moving relative to the earth surface along a direction of movement which is schematically indicated by reference sign 115 in Figure 1. The base station entity 111, via or by means of the antenna entity or functionality 111', is thereby able to provide radio coverage to a moving area (on the earth's surface), corresponding to an earth-moving radio cell 11. The second or further base station entity 112 is also schematically shown in Figure 1 as well as a further antenna entity or functionality 111" providing or serving a further radio cell 12.

The base station entity 111 (via the antenna entity or functionality 111') transmits, and the user equipment 20 receives, a reference location information and a general service time information. The reference location information relates to a specific part of the currently covered area, and the general service time information relates to until when the base station entity 111 likely stops serving the currently covered area (based on the fact that the radio cell 11 (due to the movement of the satellite-based antenna entity or functionality 111') is moving, and, hence, at a point in time is at a location from where no single point of the currently served radio cell 11 could be served (i.e. the satellite in this case left completely the current radio cell 11, or it is not visible any more from any point of the current radio cell 11).

According to the present invention, the base station entity 111 is provided with at least one antenna entity or functionality 111' (but preferably, the base station entity 111 is provided with more than one antenna entities or functionalities 111', 111"), the at least one antenna entity or functionality 111' (of the base station entity 111) is either a satellite-based antenna entity or functionality (i.e. located onboard a satellite as shown in Figure 1), or an antenna entity or functionality based on a high-altitude platform device (i.e. located onboard such a high altitude platform device, not explicitly shown in Figure 1). The base station entity 111 is able to serve (i.e. providing communication services to) the considered user equipment 20 by means of or using the at least one antenna entity or functionality 111' (or, by means of using the first antenna entity or functionality 111' during one time interval, and by means of using the second antenna entity or functionality 111" during a subsequent further time interval). In any case, typically, a service (radio) link towards and/or from the considered user equipment 20 is used in order to realize downlink and/or uplink data transmissions; this is schematically indicated, in Figure 1, by means of a dotted arrow, directed from the antenna entity or functionality 111' towards the considered specific user equipment 20.

Figure 1 schematically and exemplarily shows a configuration where the mayor parts of the functionality of the base station entity 111 is located separated from the antenna entity or functionality 111', especially at or in an earth or ground station 111; alternatively, the mayor parts of the functionality of the base station entity 111 could also be located at or in another satellite or high-altitude platform device. In such a scenario where the mayor parts of the functionality of the base station entity 111 is located separated from the antenna entity or functionality 111' (and from the further antenna entity or functionality 111"), the antenna entity or functionality 111' (and the further antenna entity or functionality 111"), typically requires some kind of feeder link or feeder connectivity (i.e. to the earth or ground station and/or to another satellite or high altitude platform device); this is schematically indicated, in Figure 1, by means of dotted arrows, directed from the base station entity 111 towards the antenna entities or functionalities 111', 111", respectively.

Alternatively to the configuration shown in Figure 1, it is also possible and preferred according to the present invention that the whole (or mayor parts of the) functionality of the base station entity 111 might be located onboard the satellite or onboard the high altitude platform device. In this case, a backhaul connectivity is typically provided, from the combined satellite-based base station entity 111 comprising the antenna entity or functionality 111', to an earth or ground station and/or to another satellite or high-altitude platform device.

In Figure 2, the situation of the user equipment 20 being served by the base station entity 111 having the satellite-based antenna entity or functionality 111' moving relative to the earth surface along a direction of movement 115 is schematically shown for two different locations of the specific user equipment 20. At a considered point in time, the base station entity 111, via the antenna entity or functionality 111', provides radio coverage to the radio cell 11 as schematically shown in Figure 2, wherein this moving radio cell typically moves together with the antenna entity or functionality 111', i.e. corresponds to an earth-moving radio cell 11. In the direction of movement 115 of the antenna entity or functionality 111', the earth-moving radio cell 11 comprises a central part 116 typically comprising the location of the reference location information 116, e.g., in the center of the radio cell 11. The exemplarily shown specific user equipment 20 in its first location, being located at or on the central part of the radio cell 11, would be able to be served by the base station entity 111 and via the antenna entity or functionality 111' during the whole time interval required for the antenna entity or functionality 111' to sweep over the radio cell 11 - i.e. from the point in time the radio coverage, by means of the antenna entity or functionality 111', is first provided to a region (on the central part of the radio cell 11) indicated by means of reference sign 117 until the point in time the radio coverage, by means of the antenna entity or functionality 111', is lost from the point of view of a region (on the central part of the radio cell 11) indicated by means of reference sign 118. In contrast thereto (i.e. to the specific user equipment 20 being located in its first considered location at or on the central part of the radio cell 11), in case the specific user equipment 20 is located rather distanced from the central part of the radio cell 11 (to the left hand side in Figure 2) the time interval it experiences or sees radio coverage (provided by that same antenna entity or functionality 111') is much shorter. Roughly, the durations of the corresponding service time intervals of these two exemplarily considered locations of the user equipment 20 are able to be schematically represented by the lengths of the two rectangles (parallel to the direction of movement 115) shown in Figure 2. Due to the distance (indicated by means of reference sign 25 in Figure 2) of the second location of the user equipment 20 with respect to the central part of the radio cell 11 (corresponding to the first location of the user equipment 20), and due to the roughly circular (or elliptical) shape of the radio cell 11, the service time interval is much shorter in case the specific user equipment 20 is located at the second location.

Hence, it is possible, according to the present invention, to compute or estimate the specific service time interval or the specific service time information of or related to the specific user equipment 20 by means of first determining the current location of the user equipment 20 (typically by means of using a global navigation satellite system and a corresponding receiver), especially with respect to or relative to the location 116 indicated by the reference location information, i.e. typically on the central part of the radio cell 11. In the second step, it is possible for the user equipment 20 to compute or to generate the estimation of the specific service time interval or the specific service time information based on the location information of its own position and the reference location information.

According to the present invention, and depending on the user equipment's 20 known location relative to the center of the satellite coverage aera 11 (reference point 116 in cell center), it is advantageously possible to optimize the user equipment's own measurement and preparation phases, e.g., for initiating a handover procedure. In one embodiment, the user equipment 20 - upon receiving the initial signal from an ascending serving satellite by reading, e.g., its SIB19 information - has knowledge of the related identities and the reference location from reading SIB19. Based on the user equipment's 20 own GNSS capabilities (i.e., typically a global navigation satellite system receiver entity or functionality or module), it knows its own geographical location and is able to calculate the distance to the cell reference point 116 (or cell center); it is also possible to calculate, from the type of GNSS positions, the distance of the specific user equipment 20 to the trajectory path of the moving radio cell 11. As the cell reference point 116 in the center of the radio cell 11 follows the satellite's trajectory (or the trajectory of the antenna entity or functionality), the distances can continuously be recalculated.

Based on the knowledge of the reference point and the cell radius, the UE can calculate the serving time of the cell in the line through the cell center (by calculating the radius divided by the cells speed derived from the satellite's velocity). From its own distance 25 to the cell center and the distance to the parallel axis to the trajectory, the UE can calculate the remaining time it will be in the coverage of this radio cell 11.

According to the present invention, especially the following pieces of information provided by each satellite, e.g. via SIB19, is used:
parameters in orbital parameter ephemeris format, e.g., as specified in NIMA TR 8350.2
-- Semi-major axis;
-- Eccentricity;
-- Argument of periapsis;
-- Longitude of ascending node;
-- Inclination;
-- Mean anomaly at epoch time.

Furthermore, it is preferred according to the present invention that the user equipment 20 transmits, to the base station entity 111 (i.e. also to the antenna entity or functionality 111'), the estimation of the specific service time interval or the specific service time information, i.e. the user equipment 20 provides its own calculated service time to the non-terrestrial network base station entity (especially an NTN gNB) to allow optimized radio resource management, RRM, procedures.

Furthermore preferably, the specific service time interval or the specific service time information, transmitted by the user equipment 20, is related to the information of the serving antenna entity or functionality 111' and/or transmitted to at least one neighbouring earth-moving radio cell or satellite coverage area of a non-serving antenna entity or functionality (e.g. the second antenna entity or functionality 111").

Still additionally, it is preferred that the specific service time interval or the specific service time information transmitted by the user equipment 20 is provided with additional information about the user equipment's 20 mobility state such as user equipment's 20 ground based velocity, heading, height information, trajectory information and/or user equipment-specific reception information, such as antenna characteristics or satellite receiving properties such as the angle over horizon of first satellite visibility.

## Claims

1. Method for computing or estimating a specific service time interval or a specific service time information of or related to a user equipment (20) in a mobile communication network (100) being or at least comprising a part corresponding to or being a non-terrestrial network, wherein the user equipment (20) is served by a base station entity (111) being part of that non-terrestrial network or that non-terrestrial network part, wherein the base station entity (111) has or is provided with - in view of serving or providing radio coverage to the user equipment (20) - at least an antenna entity or functionality (111') being either a satellite-based antenna entity or functionality, or an antenna entity or functionality based on a high-altitude platform, the antenna entity or functionality (111') moving relative to the earth surface along a direction of movement (115), thereby providing radio coverage to a moving area corresponding to an earth-moving radio cell (11),
wherein the base station entity (111) transmits, and the user equipment (20) receives, a reference location information and a general service time information, the reference location information relating to a specific part of the currently covered area, and the general service time information relating to until when the base station entity (111) likely stops serving the currently covered area,
wherein, in order to compute or estimate the specific service time interval or the specific service time information of or related to the user equipment (20), the method comprises the following steps:
-- in a first step, the user equipment (20) generates a location information of or related to its own position relative to the location (116) indicated by the reference location information,
-- in a second step, the user equipment (20) computes or generates an estimation of the specific service time interval or the specific service time information, the estimation being based on the location information of its own position and the reference location information.

2. Method according to claim 1, wherein the location information of the user equipment (20) is generated using a global navigation satellite system, wherein the user equipment (20) especially comprises a global navigation satellite system receiver entity or functionality in order to be able to generate the location information.

3. Method according to one of the preceding claims, wherein the user equipment (20), based on the generated location information, determines its lateral distance (25) from the central part (116) of the earth-moving radio cell (11), especially the central trajectory path of the moving earth-moving radio cell (11),
wherein, based on this lateral distance (25) and based on the general service time information, the specific service time interval or the specific service time information is determined, especially taking into consideration ephemeris data received from the base station entity (111).

4. Method according to one of the preceding claims, wherein the base station entity (111) transmits, and the user equipment (20) receives, the reference location information and the general service time information as information elements as part of a system information block, especially broadcast by the base station entity, especially system information block 19 with 3GPP NR technology (111).

5. Method according to one of the preceding claims, wherein the user equipment (20) transmits, to the base station entity (111), the estimation of the specific service time interval or the specific service time information.

6. Method according to one of the preceding claims, wherein the specific service time interval or the specific service time information, transmitted by the user equipment (20), is related to the information of the serving antenna entity or functionality (111') and/or transmitted to at least one neighbouring earth-moving radio cell or satellite coverage area of a non-serving antenna entity or functionality (111") and is especially indicated in remaining UTC seconds in 10 ms units since 00:00:00 on Gregorian calendar date 1 January, 1900 (midnight between Sunday, December 31, 1899 and Monday, January 1, 1900).

7. Method according to one of the preceding claims, wherein the specific service time interval or the specific service time information transmitted by the user equipment (20) is provided with additional information about the user equipment's (20) mobility state such as user equipment's (20) ground based velocity, heading, height information, trajectory information and/or user equipment-specific reception information, such as antenna characteristics or satellite receiving properties such as the angle over horizon of first satellite visibility.

8. User equipment (20) for computing or estimating a specific service time interval or a specific service time information of or related to a user equipment (20) in a mobile communication network (100) being or at least comprising a part corresponding to or being a non-terrestrial network, wherein the user equipment (20) is served by a base station entity (111) being part of that non-terrestrial network or that non-terrestrial network part, wherein the base station entity (111) has or is provided with - in view of serving or providing radio coverage to the user equipment (20) - at least an antenna entity or functionality (111') being either a satellite-based antenna entity or functionality, or an antenna entity or functionality based on a high-altitude platform, the antenna entity or functionality (111') moving relative to the earth surface, thereby providing radio coverage to a moving area corresponding to an earth-moving radio cell,
wherein the base station entity (111) transmits, and the user equipment (20) receives, a reference location information and a general service time information, the reference location information relating to a specific part of the currently covered area, and the general service time information relating to until when the base station entity (111) likely stops serving the currently covered area,
wherein, in order to compute or estimate the specific service time interval or the specific service time information of or related to the user equipment (20), the user equipment (20) in configured such that:
-- the user equipment (20) generates a location information of or related to its own position relative to the location (116) indicated by the reference location information,
-- the user equipment (20) computes or generates an estimation of the specific service time interval or the specific service time information, the estimation being based on the location information of its own position and the reference location information.

9. System or mobile communication network (100) for computing or estimating a specific service time interval or a specific service time information of or related to a user equipment (20) in a mobile communication network (100) being or at least comprising a part corresponding to or being a non-terrestrial network, wherein the user equipment (20) is served by a base station entity (111) being part of that non-terrestrial network or that non-terrestrial network part, wherein the base station entity (111) has or is provided with - in view of serving or providing radio coverage to the user equipment (20) - at least an antenna entity or functionality (111') being either a satellite-based antenna entity or functionality, or an antenna entity or functionality based on a high-altitude platform, the antenna entity or functionality (111') moving relative to the earth surface, thereby providing radio coverage to a moving area corresponding to an earth-moving radio cell,
wherein the base station entity (111) transmits, and the user equipment (20) receives, a reference location information and a general service time information, the reference location information relating to a specific part of the currently covered area, and the general service time information relating to until when the base station entity (111) likely stops serving the currently covered area,
wherein, in order to compute or estimate the specific service time interval or the specific service time information of or related to the user equipment (20), the system and mobile communication network (100) is configured such that:
-- the user equipment (20) generates a location information of or related to its own position relative to the location (116) indicated by the reference location information,
-- the user equipment (20) computes or generates an estimation of the specific service time interval or the specific service time information, the estimation being based on the location information of its own position and the reference location information.

10. Program comprising a computer readable program code, which, when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 7.

11. Computer-readable medium comprising instructions which when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 7

## Amended claims

### Amended claims in accordance with Rule 137(2) EPC.

1. Method for computing or estimating a specific service time interval or a specific service time information of or related to a user equipment (20) in a mobile communication network (100) being or at least comprising a part corresponding to or being a non-terrestrial network, wherein the user equipment (20) is served by a base station entity (111) being part of that non-terrestrial network or that non-terrestrial network part, wherein the base station entity (111) has or is provided with at least an antenna entity (111') being either a satellite-based antenna entity , or an antenna entity based on a high-altitude platform, the antenna entity (111') moving relative to the earth surface along a direction of movement (115), thereby providing radio coverage to a moving area corresponding to an earth-moving radio cell (11) and to the user equipment (20),
wherein the base station entity (111) transmits, and the user equipment (20) receives, a reference location information and a general service time information, the reference location information relating to a specific part of the currently covered area, and the general service time information relating to at which point in time the base station entity (111) via its satellite-based antenna entity (111') likely stops serving the currently covered area,
wherein, in order to compute or estimate the specific service time interval or the specific service time information of or related to the user equipment (20), the method comprises the following steps:
-- in a first step, the user equipment (20) generates a location information of its own position relative to the central part (116) of the earth-moving radio cell (11) indicated by the reference location information,
-- in a second step, the user equipment (20) computes or generates an estimation of the specific service time interval or the specific service time information, the estimation being based on the location information of its own position and the reference location information,
wherein the location information of the user equipment (20) is generated using a global navigation satellite system, wherein the user equipment (20) comprises a global navigation satellite system receiver entity in order to be able to generate the location information,
wherein the user equipment (20), based on the generated location information, determines its lateral distance (25) from the central part (116) of the earth-moving radio cell (11),
wherein, based on this lateral distance (25) and based on the general service time information, the specific service time interval or the specific service time information is determined.

2. Method according to one of the preceding claims, wherein the base station entity (111) transmits, and the user equipment (20) receives, the reference location information and the general service time information as information elements as part of a system information block, especially broadcast by the base station entity, especially system information block 19 with 3GPP NR technology (111).

3. Method according to one of the preceding claims, wherein the user equipment (20) transmits, to the base station entity (111), the estimation of the specific service time interval or the specific service time information.

4. Method according to one of the preceding claims, wherein the specific service time interval or the specific service time information, transmitted by the user equipment (20), is related to the information of the serving antenna entity (111') and/or transmitted to at least one neighbouring earth-moving radio cell or satellite coverage area of a non-serving antenna entity (111") and is especially indicated in remaining UTC seconds in 10 ms units since 00:00:00 on Gregorian calendar date 1 January, 1900 (midnight between Sunday, December 31, 1899 and Monday, January 1, 1900).

5. Method according to one of the preceding claims, wherein the specific service time interval or the specific service time information transmitted by the user equipment (20) is provided with additional information about the user equipment's (20) mobility state such as user equipment's (20) ground based velocity, heading, height information, trajectory information and/or user equipment-specific reception information, such as antenna characteristics or satellite receiving properties such as the angle over horizon of first satellite visibility.

6. User equipment (20) for computing or estimating a specific service time interval or a specific service time information of or related to a user equipment (20) in a mobile communication network (100) being or at least comprising a part corresponding to or being a non-terrestrial network, wherein the user equipment (20) is served by a base station entity (111) being part of that non-terrestrial network or that non-terrestrial network part, wherein the base station entity (111) has or is provided with at least an antenna entity (111') being either a satellite-based antenna entity, or an antenna entity based on a high-altitude platform, the antenna entity (111') moving relative to the earth surface, thereby providing radio coverage to a moving area corresponding to an earth-moving radio cell (11) and to the user equipment (20),
wherein the base station entity (111) transmits, and the user equipment (20) receives, a reference location information and a general service time information, the reference location information relating to a specific part of the currently covered area, and the general service time information relating to at which point in time the base station entity (111) via its satellite-based antenna entity (111') likely stops serving the currently covered area,
wherein, in order to compute or estimate the specific service time interval or the specific service time information of or related to the user equipment (20), the user equipment (20) in configured such that:
-- the user equipment (20) generates a location information of to its own position relative to the central part (116) of the earth-moving radio cell (11) indicated by the reference location information,
-- the user equipment (20) computes or generates an estimation of the specific service time interval or the specific service time information, the estimation being based on the location information of its own position and the reference location information.
wherein the location information of the user equipment (20) is generated using a global navigation satellite system, wherein the user equipment (20) comprises a global navigation satellite system receiver entity in order to be able to generate the location information,
wherein the user equipment (20), based on the generated location information, determines its lateral distance (25) from the central part (116) of the earth-moving radio cell (11),
wherein, based on this lateral distance (25) and based on the general service time information, the specific service time interval or the specific service time information is determined.

7. System or mobile communication network (100) for computing or estimating a specific service time interval or a specific service time information of or related to a user equipment (20) in a mobile communication network (100) being or at least comprising a part corresponding to or being a non-terrestrial network, wherein the user equipment (20) is served by a base station entity (111) being part of that non-terrestrial network or that non-terrestrial network part, wherein the base station entity (111) has or is provided with at least an antenna entity (111') being either a satellite-based antenna entity , or an antenna entity based on a high-altitude platform, the antenna entity (111') moving relative to the earth surface, thereby providing radio coverage to a moving area corresponding to an earth-moving radio cell (11) and to the user equipment (20),
wherein the base station entity (111) transmits, and the user equipment (20) receives, a reference location information and a general service time information, the reference location information relating to a specific part of the currently covered area, and the general service time information relating to at which point in time the base station entity (111) via its satellite-based antenna entity (111') likely stops serving the currently covered area,
wherein, in order to compute or estimate the specific service time interval or the specific service time information of or related to the user equipment (20), the system and mobile communication network (100) is configured such that:
-- the user equipment (20) generates a location information of its own position relative to the central part (116) of the earth-moving radio cell (11)indicated by the reference location information,
-- the user equipment (20) computes or generates an estimation of the specific service time interval or the specific service time information, the estimation being based on the location information of its own position and the reference location information.
wherein the location information of the user equipment (20) is generated using a global navigation satellite system, wherein the user equipment (20) comprises a global navigation satellite system receiver entity in order to be able to generate the location information,
wherein the user equipment (20), based on the generated location information, determines its lateral distance (25) from the central part (116) of the earth-moving radio cell (11),
wherein, based on this lateral distance (25) and based on the general service time information, the specific service time interval or the specific service time information is determined.

8. Program comprising a computer readable program code, which, when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 5.

9. Computer-readable medium comprising instructions which when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 5
